Europäisches Patentamt

European Patent Office

Office européen des brevets

(19)

(11) Veröffentlichungsnummer: **0 075 962**
**A1**

(12) **EUROPÄISCHE PATENTANMELDUNG**

(21) Anmeldenummer: 82109066.9

(22) Anmeldetag: 30.09.82

(51) Int. Cl.³: **C 08 L 83/06**
C 04 B 41/28, C 09 D 3/82

(30) Priorität: 30.09.81 SE 8105765

(43) Veröffentlichungstag der Anmeldung:
06.04.83 Patentblatt 83/14

(84) Benannte Vertragsstaaten:
AT CH DE GB LI SE

(71) Anmelder: PÜHRINGER, Josef
Björnkällevägen 35
S-183 64 Täby(SE)

(72) Erfinder: PÜHRINGER, Josef
Björnkällevägen 35
S-183 64 Täby(SE)

(74) Vertreter: Kinzebach, Werner, Dr. et al,
Reitstötter J., Prof. Dr. Dr. Kinzebach W., Dr. P.O. Box
780 Bauerstrasse 22
D-8000 München 43(DE)

(54) Imprägnierungsmittel für poröse Baumaterialien.

(57) Es wird ein Imprägnierungsmittel für poröse Materialien beschrieben, das dadurch gekennzeichnet ist, daß es wenigstens ein Alkoxysilan und/oder dessen Kondensationsprodukte in Kombination mit wenigstens einem Tensid enthält, gegebenenfalls zusammen mit einem aliphatischen Lösungsmittel und/oder Katalysatoren. Diese Mittel sind insbesondere zur Imprägnierung feinporöser Materialien geeignet.

EP 0 075 962 A1

Croydon Printing Company Ltd.

Die Erfindung betrifft ein Imprägnierungsmittel für poröses Baumaterial, insbesondere feinporöses Material auf der Basis von organischen Siliciumverbindungen und die Verwendung einer Kombination von Alkoxysilanen und/oder deren Kondensationsprodukten mit Tensiden bei der Imprägnierung von porösen Materialien.

Die herkömmlichen Imprägnierungsmittel auf der Grundlage von organischen Siliciumverbindungen, die in organischen Lösungsmitteln gelöst sind, weisen eine Reihe von Nachteilen auf. So hat sich gezeigt, daß die Eindringtiefe dieser Imprägnierungsmittel begrenzt ist, insbesondere dann, wenn die Oberfläche des zu behandelnden Materials aus einer feinporösen Schicht besteht. Eine derartige feinporöse Schicht entsteht beispielsweise beim Gießen, Pressen oder bei anderen Herstellungsmethoden von Produkten, welche Mineralfüller oder mineralisches, feinkörniges Bindemittel enthalten, wie Zement, Kalk, Schlacke, siliciumdioxidhaltige Füller (Flugasche), Sand und dergleichen; bei der hochintensiven Behandlung eines Mörtels, bestehend aus Bindemittel, Wasser und Ballastmaterial, wenn gewisse Bindemittelphasen und Teile des Ballastmaterials sich aus dem Mörtel abscheiden; bei dichten Schalungsflächen und horizontalen Flächen in Form einer dünnen, äußerst feinkörnigen Schicht an der Oberfläche; und bei der Herstellung von Betonprodukten aus Mörtel mit äußerst steifer Konsistenz, wobei außerdem das Porenvolumen dieser Produkte äußerst gering ist. Es hat sich nun gezeigt, daß es schwierig ist, diese feinporösen Materialien mit Alkoxysilanen zu imprägnieren, selbst wenn die Alkoxysilane in Alkohol gelöst sind.

Man hat versucht, diese Schwierigkeiten durch den Zusatz von Tensiden zu den Imprägnierungsmitteln zu umgehen. So beschreibt die SE-PS 372 930 ein Verfahren zur Imprägnierung poröser Materialien, das darin besteht, daß man zuerst die zu behandelnde Oberfläche einer hydromechanischen Behandlung mit überhitztem Wasserdampf unter Druck aussetzt und anschließend die Oberfläche mit einem Alkoxysilan behandelt, wobei dem Wasser Tenside zugesetzt sein können. Diese Behandlungsmethode erfordert jedoch einen zusätzlichen Arbeitsgang und kann zu einer Beschädigung der Oberfläche führen, insbesondere dann, wenn man mit hohen Drücken und hohen Temperaturen arbeitet.

Die SE-AS 76 13 507-8 beschreibt ein Imprägnierungsmittel für poröse Materialien, das aus einer Emulsion von Alkoxysilanen in Wasser oder Wasser-Alkoholmischungen besteht und das ein Tensid als Emulgiermittel enthält.

Aus den schwedischen PCT-Anmeldungen 80 335 und 80 336 ist bekannt, Mischungen von Silanen/Alkoholen/Tensiden als Zusatz zu Trocken- und Naßmörtel, nicht jedoch zur Oberflächenbehandlung zu verwenden.

Diesen Mitteln des Standes der Technik ist gemeinsam, daß der Tensidzusatz den Hydrophobierungseffekt des Alkoxysilans herabsetzt und daß die Eindringtiefe dieser Mittel nach wie vor ungenügend ist.

Aufgabe der vorliegenden Erfindung war es deshalb, ein Imprägnierungsmittel für poröse Materialien zu schaffen, dessen Eindringtiefe und Hydrophobierungseffekt verbessert ist und mit dem auch Oberflächen behandelt werden können, die noch einen beträchtlichen Wassergehalt aufweisen.

Überraschenderweise wurde nun gefunden, daß die erfindungsgemäße Kombination aus Alkoxysilanen und Tensiden diese Aufgabe erfüllt, denn der Tensidzusatz wirkt dem Hydrophobierungseffekt der Alkoxysilane nicht entgegen, sondern erhöht deren wasserabweisende Wirkung, wobei gleichzeitig die Eindringtiefe verbessert wird.

Gegenstand der Erfindung sind deshalb Imprägnierungsmittel für poröse Materialien, insbesondere für feinporöse Materialien, die dadurch gekennzeichnet sind, daß sie wenigstens ein Alkoxysilan und/oder dessen Kondensationsprodukte in Kombination mit wenigstens einem Tensid enthalten, gegebenenfalls zusammen mit einem aliphatischen Lösungsmittel und/oder (Silanol-) Polymerisations-/Kondensationskatalysatoren.

Die in den erfindungsgemäßen Mitteln zur Anwendung kommenden Alkoxysilane können Alkyl- oder Arylalkoxy- silane,Tetraalkoxysilane oder Phenoxysilane sein. Bevorzugt sind jedoch Alkyltrialkoxy- und Tetraalkoxysilane. Die Alkylgruppe der Alkyltrialkoxysilane kann geradkettig oder verzweigt sein und weist 1 bis 12 Kohlenstoffatome, vorzugsweise 1 bis 6 Kohlenstoffatome auf. Beispiele derartiger Alkylgruppen sind Methyl, Äthyl, Propyl, Isopropyl, Butyl, Isobutyl, Tertiärbutyl, Pentyl, Isopentyl, Hexyl, Octyl, Isooctyl und Decyl.

Die Alkylgruppe der Alkoxyreste weist 1 bis 6 Kohlenstoffatome, vorzugsweise 1 bis 4 Kohlenstoffatome auf. Beispiele derartiger Reste sind Propyl, Isopropyl, Butyl, Isobutyl, Pentyl und Isopentyl. Am bevorzugtesten sind jedoch Methyl und Ethyl.

Geeignete Arylgruppen sind beispielsweise Phenyl und Naphthyl, die gegebenenfalls substituiert sein können.

Die erfindungsgemäßen Mittel können auch Produkte enthalten, die durch teilweise Hydrolyse der Alkoxysilane oder durch Kondensation dieser Hydrolyseprodukte miteinander erhalten werden. Die Kondensationsprodukte sind dann oligomere Silane mit 2 bis 10 Si-O-Gruppen pro Molekül.

Die in den erfindungsgemäßen Mitteln zur Anwendung kommenden Tenside können anionische und nichtionische, vorzugsweise nicht-ionische Tenside sein. Im allgemeinen verwendet man solche Tenside, die in der Alkoxysilankomponente, und, soweit verwendet, in dem aliphatischen Lösungsmittel löslich sind. Vorzugsweise handelt es sich dabei um Tenside, deren HLB-Wert zwischen 5 und 10 liegt.

Darüber hinaus müssen die erfindungsgemäß zur Anwendung kommenden Tenside nach dem Auftragen der Imprägnierungsmittel auf das Substrat ihre oberflächenaktiven Eigenschaften verlieren. Derartige Tenside sind beispielsweise in der SE-AS 76 13 507-8 beschrieben. Man kann den Abbau der Tenside jedoch auch durch Behandeln mit Alkalien, Säuren, Oxidations- und Reduktionsmittel erreichen. Dazu gibt man zu dem zu behandelnden Substrat entsprechende Zusätze, häufig ist das Substrat jedoch bereits von sich aus sauer oder alkalisch, so daß weitere Zusätze nicht erforderlich sind. Eine Möglichkeit alkalische Reaktionsbedingungen einzustellen, ist die Zugabe von siliciumorganischen Verbindungen gemäß der SE-PS 381 453.
In Verbindung mit einem der in den erfindungsgemäßen Mitteln zur Anwendung kommenden Lösungsmittel haben die Tenside auch die Eigenschaft, das Lösungsvermögen dieser Lösungsmittel zu erhöhen.

Geeignete anionische Tenside sind beispielsweise sulfonierte und sulfatierte Ester, Amine und Polyäther, wie sulfatierte Ester der Öl- oder Rizinolsäure mit Alkoholen, wie Propanol oder Butanol; sulfonierte und sulfatierte Fette, Öle und Fettsäuren, wie Türkischrotöl; Alkalisalze von Fettsäuren, wie Laurin-, Palmitin-, Stearin-, Öl- und Rizinolsäure, oder deren Salze mit Aminen, wie Mono-, Di- und Triäthanolamin.

Geeignete nichtionische Tenside sind Ethylenoxidaddukte und oberflächenaktive Ester und Äther. Beispielsweise seien genannt, Polyoxyethylenstearat, Sorbitanmonooleat, Sorbitanmonopalmitat, Sorbitanmonostearat, Sorbitantristearat, Sorbitanmonooleat, Sorbitantrioleat, Polyoxyethylensorbitanmonooleat,-monopalmitat,-monostearat,-tristearat,-monooleat,-trioleat und dergleichen. Bevorzugte Tenside sind Sorbitanfettsäureester, Polyoxyethylensorbitanfettsäureester, Polyoxyethylenfettsäureester, Polyoxyethylenfettalkoholäther und Polyoxyethylenaddukte.

Weitere bevorzugte Tenside sind Alkylphenoläthylenoxidaddukte, Fettsäureethylenoxidaddukte, Alkylglyceridethylenoxidaddukte, Tenside auf der Basis von geradkettigen primären Alkoholen, Alkylphenolethoxylate, Fettalkoholethoxylate, alkoxylierte Alkylphenole und dergleichen.

Besonders bevorzugte Kombinationen aus Alkoxysilanen und Tensiden sind:
Propyl- oder Butyltrimethoxysilan/ Sorbitanmonooleat oder -laurat, Propyl- oder Butyltriäthoxysilan/Sorbitanmonooleat oder -laurat, Propyl- oder Butyltrimethoxy- oder -triäthoxysilan/Nonylphenoläthylenoxidaddukt mit 2-10 Mol Äthylenoxid oder Laurylalkoholäthylenoxidaddukt mit 2-18 Mol Äthylenoxid.

Anstelle der monomeren Silane können auch deren Kondensationsprodukte mit 4-8 Si-O-Gruppen oder Triäthoxysilan oder Phenyltriäthoxysilan bzw. deren Kondensationsprodukte mit 4-8 Si-O-Gruppen verwendet werden.

Bei den in den erfindungsgemäßen Mitteln gegebenenfalls zur Anwendung kommenden aliphatischen Lösungsmitteln handelt es sich um ein- oder mehrwertige Alkohole, Ketone, Ester und Äther, welche vorzugsweise wasserlöslich sind. Beispiele brauchbarer Alkohole sind Methanol, Äthanol, Propanol, Isopropanol, Butanol, Glycol, Propylenglycol, Butylenglycol und Glycerin. Geeignete Ketone sind beispielsweise Aceton und Methylethylketon. Geeignete Ester sind beispielsweise Monoester von Carbonsäuren, wie Essigsäure, mit mehrwertigen Alkoholen, wie Glycol und Glycerin. Geeignete Äther sind beispielsweise Ethylenglycolmonoethyläther und Ethylenglycolmonomethyläther.

Bevorzugte Lösungsmittel sind jedoch Alkohole und Ketone mit 1 bis 3 Kohlenstoffatomen, insbesondere Alkohole mit 1 bis 3 Kohlenstoffatomen.

Für den Fall, daß die in den erfindungsgemäßen Mitteln zur Anwendung kommenden Alkoxysilane bzw. deren Hydrolyse- und Kondensationsprodukte nicht mit dem Substrat reagieren, da dieses keine oder nur wenige Hydroxygruppen enthält, können den erfindungsgemäßen Mitteln auch Katalysatoren zugesetzt werden. Bevorzugte Katalysatoren sind solche, die in den verwendeten Alkoxysilanen oder Lösungsmitteln löslich sind.

Beispiele von Katalysatoren sind Silan(ol)-Polymerisationskatalysatoren und Silan(ol)-Kondensationskatalysatoren, welche in der Lage sind, Silane, Silanole, Siloxane und Silicone zu hydrolysieren, polymerisieren und kondensieren. Silan- und Silanol-Kondensationskatalysatoren auf der Basis organischer Amine, welche vorzugsweise eine Basenkonstante von wenigstens $10^{-10}$ aufweisen, sind beispielsweise in der US-PS 3 328 481 beschrieben.

Ein Teil der in den erfindungsgemäßen Mitteln zur Anwendung kommenden Alkoxysilane hydrolysiert erst unter sauren oder alkalischen Reaktionsbedingungen. Diese können erreicht werden durch Verwendung von hydrolysierbaren Katalysatoren, die in der SE-PS 381 453 beschrieben sind. Es handelt sich um organische Siliciumverbindungen mit basischen Gruppen, Kieselsäureester und Alkoholate mit Metallen der ersten oder zweiten Hauptgruppe oder der vierten oder fünften Nebengruppe des Periodensystems.

Weitere geeignete Katalysatoren sind die in der CH-PS 594 576 beschriebenen Metallsalze von Carbonsäuren und Polycarbonsäuren sowie Hydroxycarbonsäuren mit Metallen, wie Blei, Zinn, Nickel, Kobalt, Eisen, Cadmium, Chrom, Zink, Kupfer, Mangan, Aluminium, Magnesium, Barium, Strontium, Calcium, Cesium, Kalium, Natrium, Lithium, Titan, Zirkonium und Vanadium.

Weitere brauchbare Katalysatoren sind Metalloxide und Chelatkomplexe. Geeignete Chelatkomplexe und deren Herstellung sind in der DE-PS 564 179 und der US-PS 353 000 beschrieben. Geeignete Liganden sind dabei β-Diketone, β-Ketoester, β-Hydroxyketone, β-Aminoketone und dergleichen.

Eine weitere Gruppe brauchbarer Katalysatoren sind organische Peroxyde, wie Azodiisobutyronitril oder Benzoylperoxid.

Die Auswahl eines geeigneten Katalysators und dessen Anwendung richtet sich nach den Anforderungen, die an das Imprägnierungsmittel gestellt werden, d. h. es muß Rücksicht genommen werden auf die Transportweise des Mittels, auf die Art der Applikation, auf die Eigenschaften und Wirkungsweise des Materials usw. Es ist zu bemerken, daß sich die Eigenschaften mancher Katalysatoren und Tenside entsprechen, so daß deshalb bereits ein Tensid als Katalysator oder umgekehrt ein Katalysator als Tensid wirken kann.

Die Herstellung der erfindungsgemäßen Mittel erfolgt in einfacher Weise durch Mischen der einzelnen Komponenten, durch Auflösen der Komponenten in dem gewählten Lösungsmittel oder durch Mischen von Lösungen der einzelnen Komponenten.

Die Zusammensetzung der erfindungsgemäßen Mittel kann innerhalb weiter Bereiche variieren. Das Gewichtsverhältnis von Alkoxysilan/aliphatisches Lösungsmittel liegt zwischen 100:1 und 1:100, vorzugsweise zwischen 85:15 und 5:95, am bevorzugtesten zwischen 50:50 und 10:90.

Das Gewichtsverhältnis von Tensid/Alkoxysilan liegt zwischen 0,01 % und 10 %, vorzugsweise zwischen 0,1 % und 5 %, am bevorzugtesten zwischen 0,5 % und 2 %.

Bei Anwendung von Katalysatoren beträgt der Gehalt dieser Katalysatoren 0,01 bis 10 Gew.-%, vorzugsweise 0,1 bis 1 Gew.-%, bezogen auf das Alkoxysilangewicht.

Die Anwendung der erfindungsgemäßen Mittel erfolgt nach herkömmlichen Applikationsmethoden, beispielsweise Auftragen durch Streichen, Pinseln, Rollen, Spritzen, Sprayen, Tauchen und dergleichen. Die erfindungsgemäßen Mittel können dabei je nach Anwendungsart und Verwendungszweck als Konzentrat oder als Lösung in beliebiger Konzentration aufgetragen werden.

<u>Beispiele</u>

Die Eindringtiefe von Imprägnierungsmitteln wird bestimmt, indem man einen Probekörper nach dem Eintauchen in ein Imprägnierungsbad zerschneidet und die Eindringtiefe bestimmt. Dabei hat es sich gezeigt, daß bei diesem Verfahren die Eindringtiefe von der Art und Form des Probekörpers abhängig ist, denn die Eindringtiefe wird beim Eintauchen beispielsweise durch die im Probekörper eingeschlossene Luft beeinflußt. Zur Vermeidung von Meßfehlern wird deshalb in den nachfolgenden Beispielen auf eine Fläche von prismatischen Probekörpern das Imprägnierungsmittel in einer Menge von 0,7 Liter/m$^2$ behandelte Fläche mit Hilfe eines Pinsels aufgebracht. Die verwendeten Prismen bestehen aus Konstruktionsbeton mit einer Druckfestigkeit von 300 kp/cm$^2$ und weisen eine Fläche auf, die der Separationsschicht an den Oberflächen von Betonkonstruktionen nach dem Vergießen entspricht, d. h. eine Fläche, die einen äußerst großen Anteil an feinstem Material enthält und deshalb nur sehr schwer imprägniert werden kann.

## B e i s p i e l   1

Die Eindringtiefe der erfindungsgemäßen Mittel wird in Abhängigkeit von der Konzentration der Lösung bestimmt und mit der Eindringtiefe des gleichen Mittels ohne Tensidzusatz verglichen. Man verwendet eine Lösung von Propyltrimethoxysilan in niedrigen Alkoholen oder

M/23 235 -10- 0075962

in Konzentratform, als Tensid wird 0,1 % Sorbitanmonolaurat zugegeben. Man erhält folgende Werte:

| Konzentration | Eindringtiefe | |
|---|---|---|
| | mit Tensid | ohne Tensid |
| 20 % | 4-6 mm | 1-2 mm |
| 40 % | 5-8 | 2-4 mm |
| 100 % | 10-13 | 6-9 mm |

Die gleichen Ergebnisse erhält man, wenn man anstelle des Propyltrimethoxysilans Tetraethylsilan verwendet.

B e i s p i e l 2

Man behandelt Betonproben einmal mit einer handelsüblichen Lösung von 40 % Propyltrimethoxysilan, zum anderen mit derselben Lösung, der 1 Gew.-% eines Nonylphenolethylenoxidadduktes (Handelsbezeichnung Berol 259) zugefügt wird. Man erhält folgende Ergebnisse:

Eindringtiefe des Imprägnierungsmittels ohne Tensidzusatz: 2 bis 3 mm.

Eindringtiefe des Imprägnierungsmittels mit Tensidzusatz: 4 bis 8 mm.

Die Werte sind Durchschnittswerte aus drei Versuchen.

Das gleiche Ergebnis erhält man bei Verwendung von Tetraäthoxysilan anstelle von Propyltrimethoxysilan.

Beispiel 3

Man bestimmt die Wasseraufnahme durch Kapillarsaugen an Prüfkörpern, die mit einer Lösung verschiedener Mengen Propyltrimethoxysilan in Äthanol behandelt werden. Als Tensid wird ein Nonylphenoläthylenoxidaddukt (Berol 259) zugegeben. Zum Vergleich wird auch die Wasseraufnahme von Prüfkörpern bestimmt, die mit der gleichen Lösung ohne Tensidzusatz behandelt wurden. Man erhält folgende Werte für die Wasseraufnahme (bezogen auf das Gewicht der Probe) nach acht Tagen:

| Konzentration der Lösung | Wasseraufnahme | |
|---|---|---|
| | mit Tensid | ohne Tensid |
| 40 % | 0,9 % | 1,7 % |
| 60 % | 0,5 % | 1,0 % |
| 100 % | 0,2 % | 0,7 % |

Die unbehandelte Vergleichsprobe zeigt eine Wasseraufnahme von 4,3 % nach acht Tagen.

Beispiel 4

Man gibt zu einer 40%igen Lösung eines hydrophoben Kieselsäureesters 2 % Butyltriäthoxysilan zusammen mit 1 % Laurylalkoholäthylenoxidaddukt (4 Mol Äthylenoxid) und bestimmt die Eindringtiefe, die in diesem Fall 6 mm beträgt.

## Patentansprüche

1. Imprägnierungsmittel für poröse Baumaterialien, insbesondere feinporöse Materialien,
d a d u r c h   g e k e n n z e i c h n e t , daß
es wenigstens ein Alkoxysilan und/oder dessen Kondensationsprodukte in Kombination mit wenigstens einem Tensid enthält, gegebenenfalls zusammen mit einem aliphatischen Lösungsmittel, und/oder Katalysatoren.

2. Mittel nach Anspruch 1, dadurch gekennzeichnet, daß das aliphatische Lösungsmittel ein ein- oder mehrwertiger Alkohol mit 1-3 Kohlenstoffatomen ist.

3. Mittel nach einem der vorhergehenden Ansprüche, dadurch gekennzeichnet, daß das Alkoxysilan ausgewählt ist unter einem Alkylalkoxysilan, einem Phenylalkoxysilan und einem Tetralkoxisilan.

4. Mittel nach einem der vorhergehenden Ansprüche, dadurch gekennzeichnet, daß das Gewichtverhältnis von Alkoxysilan/aliphatisches Lösungsmittel 100:1 bis 1:100 beträgt.

5. Mittel nach einem der vorhergehenden Ansprüche, dadurch gekennzeichnet, daß der Gehalt an Tensid zwischen 0,01 % bis 10 %, vorzugsweise 0,1 % bis 5 %, des Alkoxysilangewichtes beträgt.

6. Mittel nach einem der vorhergehenden Ansprüche, dadurch gekennzeichnet, daß das Tensid in Alkoxysilanen löslich ist.

7. Mittel nach einem der vorhergehenden Ansprüche, dadurch gekennzeichnet, daß das Tensid in ein- oder mehrwertigen Alkoholen mit 1-3 Kohlenstoffatomen löslich ist.

8. Mittel nach einem der vorhergehenden Ansprüche, dadurch gekennzeichnet, daß das Tensid abbaubar ist und seine oberflächenaktiven Eigenschaften in der Gegenwart von Reduktionsmitteln, Oxidationsmitteln oder sauren oder basischen Stoffen verliert.

9. Mittel nach einem der vorhergehenden Ansprüche, dadurch gekennzeichnet, daß der Gehalt an Katalysatoren 0,01 % und 10 %, vorzugsweise 0,1 % und 1 % des Alkoxysilangewichtes beträgt.

10. Verwendung der Kombination aus Alkoxysilanen und/oder dessen Kondensationsprodukten und Tensiden nach Anspruch 1 bei der Imprägnierung von porösen Baumaterialien.

**Europäisches Patentamt**

**EUROPÄISCHER RECHERCHENBERICHT**

**0075962**
Nummer der Anmeldung

EP 82 10 9066.9

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | Chemical Abstracts Band 73, Nr. 6, 10. August 1970 Columbus, Ohio, USA Seite 66, Spalte 2, Abstract. Nr. 26735a & JP - A - 70 - 04182 (12.02.1970) -- | 1,10 |
| Y | BE - A - 768 507 (DYNAMIT NOBEL AG) * Ansprüche 1 bis 4, 8; Seite 1, Zeile 8 bis Seite 2, Zeile 30; Seite 4, Zeilen 17 bis 28 * -- | 1-4 |
| | DE - A1 - 3 021 018 (DAICEL CHEMICAL INDUSTRIES, LTD.) | |
| Y | * Seite 8, Zeile 9 bis Seite 13, Zeile 15 * | 1-4 |
| A | * Anspruch 1; Seite 11, Zeilen 7 bis 12 * -- | 5,9 |
| | DE - A1 - 2 751 714 (PÜHRINGER) | |
| A | * Ansprüche 1, 7 * | 1,8 |
| D,A | & SE - B - 7 613 507 -- | |
| A | BE - A - 675 533 (UCB SA) * Seite 3, Zeilen 1 bis 25; Seite 4, Zeile 28 bis Seite 6, Zeile 8 * ---- | 1,4,5 |

**KLASSIFIKATION DER ANMELDUNG (Int. Cl.³)**

C 08 L 83/06
C 04 B 41/28
C 09 D 3/82

**RECHERCHIERTE SACHGEBIETE (Int. Cl.³)**

C 04 B 41/00
C 08 G 77/18
C 08 L 83/00
C 09 D 3/00

X Der vorliegende Recherchenbericht wurde für alle Patentansprüche erstellt.

| Recherchenort | Abschlußdatum der Recherche | Prüfer |
|---|---|---|
| Berlin | 21-12-1982 | IDEZ |

EPA form 1503.1 06.78